# EUROPÄISCHE PATENTSCHRIFT

(11) **EP 0 861 759 B1**
(45) Veröffentlichungstag und Bekanntmachung des Hinweises auf die Patenterteilung: **17.03.2004**
(21) Anmeldenummer: 98101145.5
(22) Anmeldetag: 23.01.1998
(51) Int. Cl.: B60R 21/20

(54) **Beifahrer-Airbagmodul**
Passenger side air bag module
Module de sac gonflable côté passager

(30) Priorität: 15.02.1997 DE 19705830
(43) Veröffentlichungstag der Anmeldung: 02.09.1998
(73) Patentinhaber: TRW Automotive Safety Systems GmbH, 63743 Aschaffenburg (DE)
(72) Erfinder: Bathon, Michael, 63811 Stockstadt (DE); Fäth, Stefan, 63743 Aschaffenburg (DE); Bohn, Stefan, 63773 Goldbach (DE)
(74) Vertreter: Degwert, Hartmut, Dipl.-Phys.

(56) Entgegenhaltungen:
- EP-A- 0 558 271
- EP-A- 0 687 597
- DE-A- 4 137 691
- US-A- 5 498 030

## Beschreibung

Die Erfindung betrifft ein Airbagmodul für die Beifahrerseite eines Kraftfahrzeugs gemäß dem Oberbegriff von Anspruch 1.

Bei der aus der DE 41 37 691 A 1 bekannten Gassack-Einheit, die die meisten der vorgenannten Merkmale bereits offenbart, wird der Behälter von einem Schrumpfschlauch gebildet, der eine Sollbruchstelle aufweist, die beim Entfalten des Gassacks aufreißt. Diese Gassack-Einheit erfüllt die nachstehend aufgeführten Anforderungen nur teilweise.

Bei dem aus der DE 196 16 941 C 1 bekannten Bauteilsatz ist eine Stoffbahn um das Diffusorrohr herumgeschlungen, die sich bis zur Abdeckkappe des Airbagmoduls erstreckt und so auf den Längsseiten eine Begrenzung des Airbagmoduls bildet. Dabei stört, daß das Modul zwingend auch die Abdeckkappe umfassen muß, so daß derartige Beifahrer-Airbagmodule nicht einsetzbar sind, wenn die Abdeckkappe vom Kunden einer anderen Vormontage-Baugruppe, beispielsweise dem Armaturenbrett, zugeordnet wird.

Aus der gattungsgemäßen EP-A-0 687 597 ist ein Gassackmodul bekannt, bei dem eine aus thermoplastischem Material gebildete Umhüllung einen Gasgenerator, einen Diffusor und den Gassack umgibt. Die Umhüllung ist so dünn ausgebildet, daß sie beim Entfalten des Gassacks aufreißt. Alternativ dazu ist eine Sollbruchstelle im Austrittsbereich des Luftsacks in der Umhüllung vorgesehen.

Rasch aufblasbare Luftkissen, sogenannte Airbags gehören heute weitgehend zur Standardausrüstung von Personenkraftfahrzeugen. Dabei wird - ausgehend von einem elektronisch ermittelten Verzögerungssignal - mittels eines pyrotechnischem Zünders eine explosionsartige Verbrennung mit Gaserzeugung ausgelöst und/oder ein komprimiertes Druckgas freigesetzt und innerhalb von 20 bis 60 Millisekunden der zusammengefaltete Airbag aufgeblasen, der dadurch zu einem Luftpolster wird, mit dem ein hartes Aufschlagen des Fahrzeuginsassen auf die ihn umgebenden Karosserieteile zumindest in einer Beschleunigungsrichtung verhindert wird, wenn bei einem Zusammenstoß eine vorgegebene kritische Verzögerung festgestellt und das Zündsignal ausgelöst wird.

Für das aus zusammengefaltetem Airbag und Gaserzeuger mit Zünder bestehende Airbag-Modul ist bei modernen Fahrzeugen in der Karosserie ein entsprechender Einbauraum vorgesehen, der im allgemeinen mit einer auf die Einbauumgebung abgestimmten Abdeckung so verschlossen ist, daß der Airbag beim raschen Aufblasen ungehindert austreten kann. Daraus ergeben sich für das Airbag-Modul zwei Forderungen:
Es muß Anschlüsse aufweisen, damit es unter der Abdeckung im Einbauraum befestigt werden kann und es muß im Hinblick auf Lagerung, Transport, Einbauvorbereitung, Montage und normale Beanspruchung während der üblichen Lebensdauer eines Fahrzeugs geschützt untergebracht sein.

Zu diesem Zweck ist bereits eine Vielzahl von Gehäusen oder dergl. vorgeschlagen worden, die die vorgenannten Funktionen mehr oder weniger gut erfüllen, die jedoch überwiegend viel zu aufwendig ausgestaltet sind und dazu insbesondere ein relativ hohes Gewicht aufweisen. Die bekannten Gehäuse sind in der Regel aus Metall und/oder Kunststoff hergestellt, wobei erhebliche Bemühungen darauf gerichtet sind, einerseits den aus einem reißfesten, textilen Gewebe bestehenden Airbag im Gehäuse zu befestigen und andererseits das Gehäuse mit Anschlußteilen auszustatten, die am Einbauort eine sichere Verbindung mit der Karosserie ermöglichen. Derartige Gehäuse sind bei der angestrebten, möglichst rationellen, ökonomischen und ökologischen Fahrzeugherstellung oft nicht akzeptabel. Daraus ergibt sich die Aufgabe, die vorgenannten Schutzfunktionen für ein Airbag-Modul möglichst material- und gewichtssparend zu realisieren, ohne Abstriche bei der Sicherung des Airbag-Moduls gegen Verschmutzung und jegliche Art von Beschädigung in Kauf nehmen zu müssen.

Zur Lösung dieser Aufgabe sind die in kennzeichnenden Teil von Patentanspruch 1 angegebenen Merkmale vorgesehen.

Dem liegt die Erwägung zugrunde, daß die Einbauräume in den Karosserien inzwischen derart weiterentwickelt sind, daß man beim Airbagmodul nicht mehr unbedingt eine abgesehen von der Austrittsöffnung für den Airbag-allseitig wirkende Einschließung in Form eines starren Gehäuses oder eines eigenfesten Behälters vorsehen muß, um die vorgenannten Schutzfunktionen zuverlässig erfüllen zu können.

Es genügt vielmehr sicherzustellen, daß das Airbagmodul nach seiner Herstellung für Lagerung, Transport, Einbauvorbereitung und Montage soweit geschützt ist, daß keinerlei Beschädigungen auftreten können. Nach dem Einbau muß es nur noch gegen Einwirkungen von Schmutz und gegen Temperatur- und Witterungseinflüsse geschützt werden. Daher ist es erfindungsgemäß möglich, die Behälterwandung weitgehend aus textilem Material herzustellen, so daß das Diffusorrohr mit Gasgenerator und Zünder zusammen mit dem gefalteten Airbag in einem sackartigen Beutel hinreichend gesichert ist und dadurch insbesondere die materialbedingten Gewichtseinsparungen beim Übergang auf textiles Material zum Tragen kommen. Wichtig ist auch, daß ein textilgerechter Verschluß vorgesehen ist, der keine anderen Materialien erfordert und der einerseits einen zuverlässigen Einschluß für das Airbagmodul erlaubt, andererseits aber auch leicht geöffnet werden kann, wenn der Airbag gezündet wird. Dabei klappen die textilen Abschnitte, die mittels einer Schlitz-Lasche-Verbindung miteinander verbunden sind, in Entfaltungsrichtung des Airbags nach vorne auf und geben den zum Austritt des Airbags erforderlichen Querschnitt frei.

Vorteilhaft ist auch die Befestigung des Airbags am Diffusorrohr. Die im Bereich der stirnseitigen Enden des Diffusorrohres vorgesehenen Randbereiche werden einfach festgeklemmt, wodurch eine dem textilen Material angepaßte Befestigung erreicht wird, die bei einer Zündung des Airbags gleichmäßig beansprucht wird und daher nicht ausreißen kann.

Vorteilhafte Ausgestaltungen des Erfindungsgedankens sind in den Unteransprüchen 2 bis 8 beschrieben. Weitere Einzelheiten werden anhand der in den Figuren 1 bis 6 dargestellten Ausführungsbeispielen näher erläutert. Es zeigen:
- Fig. 1-3: ein erstes Ausführungsbeispiel eines erfindungsgemäßen Airbagmoduls im Längsschnitt, im Querschnitt und in einer vergrößerten Einzelheit
- Fig. 4+5: ein zweites Ausführungsbeispiel im Längsschnitt und Querschnitt
- Fig. 6: ein drittes Ausführungsbeispiel im Längsschnitt.

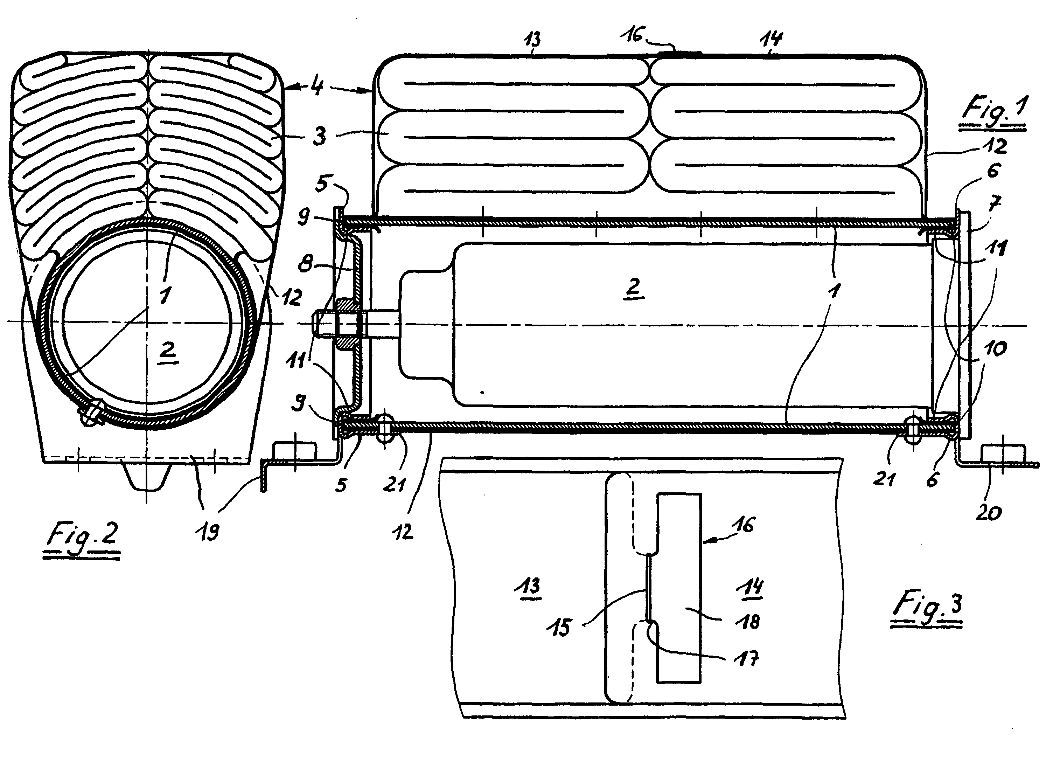

Das in den Figuren 1 bis 3 dargestellte Airbagmodul für die Beifahrerseite eines Kraftfahrzeugs umfaßt ein Diffusorrohr 1, einen im Diffusorrohr 1 angeordneten und mit dem Diffusorrohr 1 verbundenen Gasgenerator, einen nicht näher bezeichneten Zünder, einen außerhalb des Diffusorrohres 1 angeordneten, am Diffusorrohr 1 befestigten, zusammengefalteten Luftsack 3, einen den Luftsack 3 umschließenden Behälter 4 sowie Deckelteile 5, 6, die zwischen einem endseitigen Flansch 7 des Gasgenerators 2 bzw. einer Generatorscheibe 8 und den stirnseitigen Enden 9, 10 des Diffusorrohres 1 eingespannt sind.

Der Luftsack 3 ist mit einer über das Diffusorrohr 1 gezogenen Halteschlaufe ausgestattet, deren Randbereiche 11 an den stirnseitigen Enden 9, 10 des Diffusorrohres 1 mit eingeklemmt sind, wodurch eine einfache, textilgerechte Befestigung zwischen Luftsack 3 und Diffusorrohr 1 geschaffen wird. Erfindungsgemäß besteht der den Luftsack 3 umschließende Behälter 4 im wesentlichen aus einem das Diffusorrohr 1 umschließenden, sackartigen Beutel 12 aus textilem Material, bei dem zwei einander teilweise überlappende, lösbar miteinander verbundene Abschnitte 13, 14 den Verschluß des Austrittsquerschnitts für den sich entfaltenden Luftsack 3 bilden. Bei der Verspannung des Gasgenerators mit dem Diffusorrohr 1 wird einerseits ein am Gasgenerator 2 endseitig ausgebildeter Flansch 7 und andererseits eine Generatorscheibe 8 verwendet, um die Deckelteile 5, 6 gegen die stirnseitigen Enden 9, 10 des Diffusorrohres 1 anzupressen, indem in an sich bekannter Weise eine nicht näher gekennzeichnete Schraubverbindung dazu benutzt wird, die erforderlichen Anpreßkräfte zu erzeugen, wobei der Gasgenerator 2 als ein auf Zug beanspruchtes Bauteil benutzt wird. Der sackartige Beutel 12 umspannt, wie insbesondere aus Fig. 2 ersichtlich, sowohl das Diffusorrohr 1 wie auch den zusammengefalteten Airbag 3 und ist im Austrittsbereich des Airbags 3 mittels einer Schlitz-Lasche-Verbindung geschlossen. Am sackartigen Beutel 12 sind dazu Abschnitte 13 und 14 vorgesehen, die über den zusammengefalteten Airbag geklappt sind. Am Abschnitt 13 ist eine Lasche 16 mit einem schmalen Halsteil 17 und einem breiteren Kopfteil 18 ausgebildet, die durch einen Schlitz 15 im Abschnitt 14 hindurchgeführt werden kann und so den lösbaren Verschluß für den zusammengefalteten Luftsack bildet.

Die Deckelteile 5, 6, die zusammen mit den Randbereichen 11, der Halteschlaufe des Luftsacks 3 stirnseitig am Diffusorrohr 1 festgeklemmt sind, weisen Anschlußflansche 19, 20 zur Befestigung des Airbagmoduls in der Fahrzeugkarosserie auf. Ferner ist eine abgebogene Lasche 21 vorgesehen, um die Deckelteile 5, 6 in Umfangsrichtung am Diffusorrohr 1 festlegen zu können.

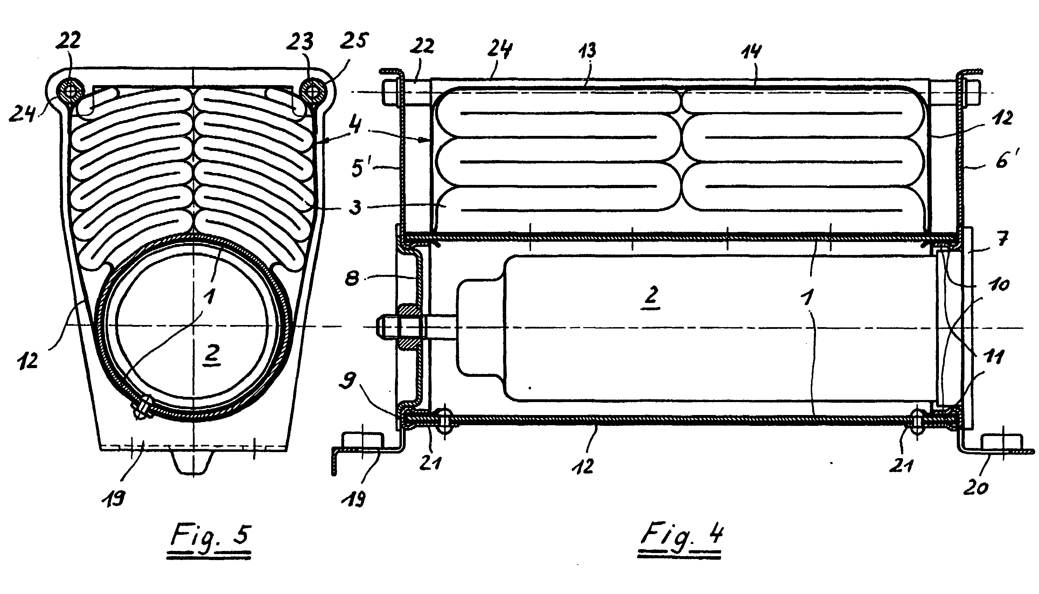

Das Ausführungsbeispiel der Figuren 4 und 5 unterscheidet sich von demjenigen nach den Figuren 1 und 2 einmal dadurch, daß die Deckelteile 5', 6' nach oben hin verlängert sind und sich bis über die Höhe des zusammengefalteten Luftsacks 3 erstrecken. Bei dieser Ausführungsform kann man links und rechts neben dem Austrittsquerschnitt für den sich entfaltenden Luftsack 3 je eine Stange 22, 23 oder dergl. vorsehen, wenn im oberen Bereich des Airbagmoduls eine solche zusätzliche Versteifung wünschenswert oder erforderlich ist. In diesem Fall kann man dann am Beutel 12 zusätzliche Halteschlaufen 24, 25 vorsehen, die die Stangen 22, 23 umschließen bzw. durch die die Stangen 22, 23 hindurchgesteckt und an den Deckelteilen 5', 6' befestigt werden können. Der Beutel 12 kann dann von der einen Stange 22 um das Diffusorrohr 1 herum bis zur anderen Stange gespannt werden.

Auf eine Wiederholung der Beschreibung für die Elemente in den Figuren 4 und 5, die sich gegenüber den gleichbezifferten Elementen der Figuren 2 und 3 nicht verändert haben, wird verzichtet. Es sei aber darauf hingewiesen, daß der Austrittsquerschnitt für den sich entfaltenden Luftsack 3 bei der Ausführungsform gemäß den Figuren 4 und 5 genauso ausgestaltet ist, wie bei dem Ausführungsbeispiel nach den Figuren 1 und 2, für die diese Einzelheit in Fig. 3 dargestellt ist.

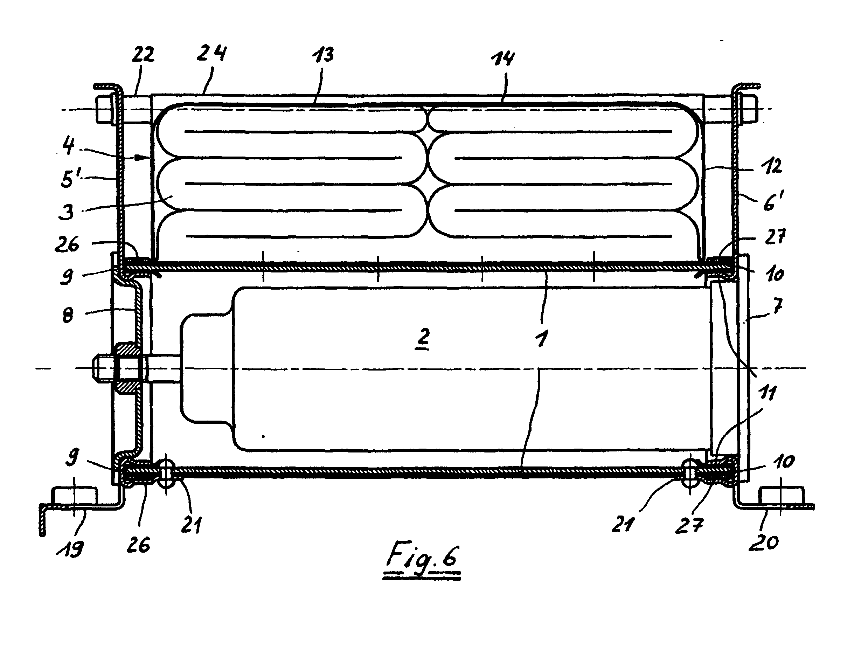

Das Ausführungsbeispiel gemäß Fig. 6 unterscheidet sich von demjenigen gemäß Fig. 4 und 5 nur dadurch, daß zusätzlich zwei schmale Halteringe 26, 27 vorgesehen sind, mittels derer die Randstreifen 11 des Luftsacks 3 endseitig außen am Diffusorrohr 1 festklemmbar sind. Diese Ausführungsform wird man anwenden, wenn bei der Zündung des Airbags besonders hohe Haltekräfte erforderliche sind, bzw. wenn man aus Gründen der Platz- und Materialersparnis nur einen schmalen Einklemmbereich vorsehen will.

Alle anderen Elemente und Bezugsziffern entsprechen denen in den Figuren 1, 2, 4 und 5 und werden hier nicht noch einmal beschrieben. Selbstverständlich ist auch beim Ausführungsbeispiel gemäß Fig. 6 der Verschluß des Austrittsquerschnitts, wie in Fig. 3 dargestellt, ausgeführt.

## Patentansprüche

1. Airbagmodul für die Beifahrerseite eines Kraftfahrzeugs, mit einem Diffusorrohr (1), einem im Diffusorrohr (1) angeordneten und mit dem Diffusorrohr (1) verbundenen Gasgenerator (2), einem außerhalb des Diffusorrohrs (1) angeordneten, am Diffusorrohr (1) befestigten, zusammengefalteten Luftsack (3), einem den Luftsack (3) und das Diffusorrohr (1) umschließenden Behälter (4), der aus einem sackartigen Beutel (12) besteht, **dadurch gekennzeichnet, daß** ferner Deckelteile (5, 6) vorgesehen sind, die zwischen einem endseitigen Flansch (7) des Gasgenerators (2) und einem stirnseitigen Ende (9) des Diffusorrohres (1) bzw. einer Generatorscheibe (8) und einem anderen stirnseitigen Ende (10) des Diffusorrohres (1) eingespannt sind und dabei jeweils Randbereiche (11) einer über das Diffusorrohr (1) gezogenen Halteschlaufe des Luftsacks (3) festklemmen, und daß der sackartige Beutel (12) aus textilem Material besteht, bei dem zwei einander teilweise überlappende, lösbar miteinander verbundene Abschnitte (13, 14) mittels einer Schlitz-Lasche-Verbindung (15,16) den Verschluß eines Austrittsquerschnitts für den sich entfaltenden Luftsack (3) bilden.

2. Airbagmodul nach Anspruch 1, **dadurch gekennzeichnet, daß** im Überlappungsbereich eines der Abschnitte (13) ein Schlitz (15) vorgesehen ist und der andere Abschnitt (14) eine Lasche (16) mit schmalem Halsteil (17) und breiterem Kopfteil (18) aufweist, wobei der Austrittsquerschnitt lösbar verschlossen ist, indem die Lasche (16) durch den Schlitz (15) gesteckt ist.

3. Airbagmodul nach Anspruch 2, **dadurch gekennzeichnet, daß** die Lasche (16) aus einem endseitig über das Halsteil (17) mit dem Abschnitt (14) verbundenen, im wesentlichen rechteckigen Textilteil besteht, das zur Ausbildung eines verstärkten Kopfteils (18) zwei- oder mehrlagig gefaltet und miteinander verbunden ist.

4. Airbagmodul nach einem der Ansprüche 1 bis 3, **dadurch gekennzeichnet, daß** die Deckelteile (5,6) Anschlußflansche (19,20) oder dergl. zur Befestigung des Airbagmoduls in der Fahrzeugkarosserie aufweisen.

5. Airbagmodul nach Anspruch 4, **dadurch gekennzeichnet, daß** die Deckelteile (5,6) mittels einer abgebogenen Lasche (21) am Diffusorrohr (1) befestigt sind.

6. Airbagmodul nach einem der Ansprüche 1 bis 5, **dadurch gekennzeichnet, daß** die Deckelteile (5', 6') sich seitlich über mindestens die gesamte Höhe des zusammengefalteten Luftsacks (3) erstrecken, daß sie über zwei Stangen (22, 23) oder dergl., die sich rechts und links neben dem Austrittsquerschnitt für den sich entfaltenden Luftsack (3) erstrecken, miteinander verbunden sind und daß der Beutel (12) die Stangen (22, 23) umschließende Halteschlaufen (24, 25) aufweist, mittels derer er von der einen Stange (22) um das Diffusorrohr (1) herum bis zur anderen Stange (23) spannbar ist.

7. Airbagmodul nach Anspruch 6, **dadurch gekennzeichnet, daß** die Deckelteile (5, 6) zusammen mit dem zwischen den Stangen (22, 23) gespannten Beutel (12) einen Schußkanal für den sich entfaltenden Luftsack (3) bilden.

8. Airbagmodul nach einem der Ansprüche 1-7, **dadurch gekennzeichnet, daß** zusätzlich zu den Deckelteilen (5, 5', 6, 6') zwei schmale Halteringe (26, 27) vorgesehen sind, mittels derer Randstreifen (11) des Luftsacks (3) endseitig außen am Diffusorrohr (1) festklemmbar sind.

## Claims

1. An airbag module for the passenger side of a motor vehicle, comprising a diffusor pipe (1), a gas generator (2) arranged in and connected to the diffusor pipe (1), a folded airbag (3) arranged outside of and fastened to the diffusor pipe (1), a container (4) enclosing the airbag (3) and the diffusor pipe (1) and consisting of a sack-like pouch (12), **characterized in that** further provided are cover components (5, 6) which are clamped between a flange (7) at an end of the gas generator (2) and a face end (9) of the diffusor pipe (1) and between a generator disk (8) and another face end (10) of the diffusor pipe (1), each securely clamping edge regions (11) of a holding loop of the airbag (3) pulled over the diffusor pipe (1), and that the sack-like pouch (12) is made of a textile material in which two sections (13, 14), partly overlapping and releasably connected to each other, form the closure of an exit cross-section for the unfolding airbag (3) by means of a tab and slit connection (15, 16).

2. The airbag module according to claim 1, **characterized in that** a slit (15) is provided in the area of overlap of one of the sections (13) and the other section (14) has a tab (16) with a narrow neck portion (17) and a wider head portion (18), the exit cross-section being releasably closed by the tab (16) being inserted through the slit (15).

3. The airbag module according to claim 2, **characterized in that** the tab (16) consists of a substantially rectangular textile piece connected to an end of the section (14) by way of the neck portion (17) and folded into two or more layers connected together to form a reinforced head portion (18).

4. The airbag module according to any of claims 1 to 3, **characterized in that** the cover components (5, 6) include connecting flanges (19, 20) or the like to fasten the airbag module in the vehicle body.

5. The airbag module according to claim 4, **characterized in that** the cover components (5, 6) are secured to the diffusor pipe (1) by means of a bent-down tab (21).

6. The airbag module according to any of claims 1 to 5, **characterized in that** the cover components (5', 6') extend laterally over at least the entire height of the folded airbag (3), that they are connected with each other by two rods (22, 23) or the like extending to the left and right of the exit cross-section for the unfolding airbag (3), and that the pouch (12) has holding loops (24, 25) which enclose the rods (22, 23) and by means of which it can be tensioned from the one rod (22) around the diffusor pipe (1) and to the other rod (23).

7. The airbag module according to claim 6, **characterized in that** the cover components (5, 6), in conjunction with the pouch (12) tensioned between the rods (22, 23), constitute an ejection channel for the unfolding airbag (3).

8. The airbag module according to any of claims 1 to 7, **characterized in that**, in addition to the cover components (5, 5', 6, 6'), two narrow holding rings (26, 27) are provided by means of which edge strips (11) of the airbag (3) can be clamped in place at the ends on the outside of the diffusor pipe (1).

## Revendications

1. Module d'airbag pour le côté passager d'un véhicule automobile, comportant un tube diffuseur (1), un générateur de gaz (2) agencé dans le tube diffuseur (1) et relié au tube diffuseur (1), un coussin gonflable (3) replié, agencé en dehors du tube diffuseur (1) et fixé sur le tube diffuseur (1), un récipient (4) entourant le coussin gonflable (3) et le tube diffuseur (1) et constitué par une poche en forme de sac (12), **caractérisé en ce qu'**il est en outre prévu des parties de couvercle (5, 6) qui sont serrées entre une bride (7) côté extrémité du générateur de gaz (2) et une extrémité côté frontal (9) du tube diffuseur (1) et entre un disque de générateur (8) et une autre extrémité côté frontal (10) du tube diffuseur (1), respectivement, et qui serrent chacune des zones de bordure (11) d'une boucle de retenue du coussin gonflable (3), tirée au-dessus du tube diffuseur (1), et **en ce que** la poche en forme de sac (12) est en un matériau textile dans lequel deux tronçons (13, 14) se chevauchant partiellement et reliés l'un à l'autre de manière détachable forment au moyen d'une liaison à fente et à languette (15, 16) la fermeture d'une section transversale de sortie pour le coussin gonflable (3) se déployant.

2. Module d'airbag selon la revendication 1, **caractérisé en ce qu'**il est prévu une fente (15) dans la région de chevauchement de l'un des tronçons (13), et **en ce que** l'autre tronçon (14) présente une patte avec partie de col (17) étroite et partie de tête (18) plus large, la section transversale de sortie étant fermée de manière détachable en introduisant la patte (16) à travers la fente (15).

3. Module d'airbag selon la revendication 2, **caractérisé en ce que** la patte (16) est constituée par une partie textile sensiblement rectangulaire reliée, côté extrémité, au tronçon (14) par la partie de col (17) et pliée en deux couches ou plus reliées les unes aux autres, pour former une partie de tête (18) renforcée.

4. Module d'airbag selon l'une des revendications 1 à 3, **caractérisé en ce que** les parties de couvercle (5, 6) présentent des brides de raccordement (19, 20) pour fixer le module d'airbag dans la carrosserie du véhicule.

5. Module d'airbag selon la revendication 4, **caractérisé en ce que** les parties de couvercle (5, 6) sont fixées au tube diffuseur (1) au moyen d'une patte (21) recourbée.

6. Module d'airbag selon l'une des revendications 1 à 5, **caractérisé en ce que** les parties de couvercle (5', 6') s'étendent latéralement sur au moins toute la hauteur du coussin gonflable (3) plié, **en ce qu'**elles sont reliées l'une à l'autre par deux barres (22, 23) ou similaires qui s'étendent à droite et à gauche à côté de la section transversale de sortie pour le coussin gonflable (3) déployé, et **en ce que** la poche (2) présente des boucles de retenue (24, 25) entourant les barres (22, 23), au moyen desquelles elle peut être tendue depuis une des barres (22) autour du tube diffuseur (1) jusqu'à l'autre barre (23).

7. Module d'airbag selon la revendication 6, **caractérisé en ce que** les parties de couvercle (5, 6) forment, conjointement avec la poche (12) tendue entre les barres (22, 23) un canal d'éjection pour le coussin gonflable (3) se déployant.

8. Module d'airbag selon l'une des revendications 1 à 7, **caractérisé en ce qu'**il est prévu additionnellement aux parties de couvercle (5, 5', 6, 6') deux bagues de retenue (26, 27) étroites, au moyen desquelles des bandes de bordure (11) du coussin gonflable (3) peuvent être serrées côté extrémité, à l'extérieur du tube diffuseur (1).
